# EUROPÄISCHE PATENTSCHRIFT

(11) **EP 3 016 887 B1**
(45) Veröffentlichungstag und Bekanntmachung des Hinweises auf die Patenterteilung: **09.08.2017**
(21) Anmeldenummer: 14734446.9
(22) Anmeldetag: 26.06.2014
(51) Int. Cl.: B65D 85/68

(54) **VERPACKUNG FÜR EIN WISCHERBLATT**
PACKAGING FOR A WIPER BLADE
EMBALLAGE POUR UN BALAI D'ESSUIE-GLACE

(30) Priorität: 05.07.2013 DE 102013213207
(43) Veröffentlichungstag der Anmeldung: 11.05.2016
(73) Patentinhaber: Robert Bosch GmbH, 70442 Stuttgart (DE)
(72) Erfinder: CASTELEYN, Pieter, 3012 Wilsele (BE); HERINCKX, Dirk, 3350 Dries-Linter (BE)
(86) Internationale Anmeldenummer: PCT/EP2014/063490
(87) Internationale Veröffentlichungsnummer: WO 2015/000781

(56) Entgegenhaltungen:
- EP-A1- 1 512 593
- DE-A1- 19 829 125
- DE-U1-202007 010 226
- US-A- 5 379 896

## Beschreibung

Die Erfindung betrifft eine Verpackung für ein Wischerblatt. Insbesondere betrifft die Erfindung eine Verpackung für ein Wischerblatt und Adaptern zur Befestigung des Wischerblatts an einem Scheibenwischersystem.

### Stand der Technik

Ein Scheibenwischersystem, beispielsweise zum Einsatz an einem Kraftfahrtzeug, umfasst einen Wischerarm, an dem ein Wischerblatt befestigt ist. Mittels des Wischerarms wird das Wischerblatt in einer oszillierenden Bewegung um eine Wischerwelle über eine Scheibe geführt, insbesondere eine Sichtscheibe des Kraftfahrzeugs. Beim Wischerblatt handelt es sich um ein Verschleißteil, das in regelmäßigen Abständen oder nach übermäßiger Beanspruchung ausgetauscht werden sollte. Das Austauschen des Wischerblatts wird üblicherweise einem Fahrer des Kraftfahrzeugs überlassen.

Ein neu an dem Wischersystem anzubringendes Wischerblatt kann im Zubehörhandel erworben werden und ist üblicherweise in einer Verkaufsverpackung aufgenommen. Die Vielzahl unterschiedlicher Kraftfahrzeuge und unterschiedliche Ausführungsformen der einzelnen Kraftfahrzeuge bedingen eine große Vielfalt unterschiedlicher Wischerblätter. Um ein Wischerblatt an unterschiedlichen Scheibenwischersystemen anbringen zu können, ist üblicherweise ein Adapter vorgesehen, der für das jeweilige Kraftfahrzeugmodell und das Wischerblatt spezifisch ist. Der Adapter wird zusammen mit dem Wischerblatt in der Verpackung aufgenommen. Dabei gibt es unterschiedliche Möglichkeiten, den Adapter und das Wischerblatt in der Verpackung anzuordnen.

EP 1 512 593 A1 schlägt vor, ein rahmenloses Scheibenwischerblatt, das elastisch in eine gekrümmte Form gebogen ist, mittels eines Jochs in eine weniger gekrümmte Form zu bringen, um eine Handhabung des Scheibenwischerblatts während des Transports, der Lagerung oder der Zurschaustellung zu verbessern.

Der Erfindung liegt die Aufgabe zugrunde, eine verbesserte Verpackung zur Aufnahme eines Wischerblatts und mehrerer Adapter anzugeben. Die Erfindung löst diese Aufgabe mittels einer Verpackung mit den Merkmalen des unabhängigen Anspruchs. Unteransprüche geben bevorzugte Ausführungsformen wieder.

### Offenbarung der Erfindung

Eine Verpackung zur Aufnahme eines Wischerblatts für ein Scheibenwischersystem umfasst eine Außenverpackung zur Aufnahme des Wischerblatts und eine Halteeinrichtung zur Fixierung mehrerer unterschiedlicher Adapter in der Außenverpackung, wobei die Adapter zur Befestigung des Wischerblatts an einem Wischerarm des Scheibenwischersystems eingerichtet sind Dabei fixiert die Halteeinrichtung die Adapter am Wischerblatt an einer Stelle, die der Wischerlippe des Wischerblatts gegenüber liegt.

Durch diese Anordnung der Adapter am Wischerblatt können die Adapter Platz sparend und sicher in der Außenverpackung angeordnet sein. Die Wischerlippe kann durch die abgewandte Position der Adapter gut geschützt sein. Die Halteeinrichtung kann den genauen Sitz der Adapter bezüglich des Wischerblatts sicherstellen.

In einer ersten Variante umfasst die Halteeinrichtung ein Spritzgussteil. Das Spritzgussteil kann kostengünstig spezifisch für die Halterung der Adapter am Wischerblatt hergestellt werden. Das Spritzgussteil kann dazu eingerichtet sein, in das Wischerblatt oder den jeweiligen Adapter einzurasten und so einen besonders sicheren Sitz der Adapter am Wischerblatt sicherzustellen.

In einer weiteren Ausführungsform umfasst ein Adapter ein Spritzgussteil, das gemeinsam mit der Halteeinrichtung herstellbar ist. Dadurch können der Adapter und die Halteeinrichtung in einem gemeinsamen Arbeitsgang herstellbar sein, wodurch Kosten bei der Herstellung eingespart werden können. Der Adapter und die Halteeinrichtung können auch einteilig miteinander ausgeführt und dazu eingerichtet sein, an vorbestimmten Sollbruchstellen voneinander getrennt zu werden, wenn der Adapter am Wischerblatt eingesetzt werden soll.

In einer zweiten Variante umfasst die Halteeinrichtung ein aufgeschäumtes Element. Das aufgeschäumte Element kann beispielsweise Polyurethan umfassen. Dadurch kann der Adapter besonders schonend am Wischerblatt gehalten werden. Die Masse des aufgeschäumten Elements kann gering sein, sodass eine verringerte Menge an Rohstoffen für die Halteeinrichtung eingesetzt werden muss.

In den genannten Varianten kann die Halteeinrichtung einen Abstandhalter aufweisen, der im Bereich der Mitte des Wischerblatts zu liegen kommt, wobei Enden des Wischerblatts und die Halteeinrichtung derart an gegenüberliegenden Begrenzungen der Außenverpackung zu liegen kommen, dass eine konkave Biegung einer Wischerlippe des Wischerblatts reduziert wird. Die konkave Biegung kann insbesondere durch die Vorspannung eines rahmenlosen Wischerblatts bedingt sein. Durch die Reduzierung der konkaven Biegung kann das Volumen des verpackten Wischerblatts mit dem Adapter reduziert sein. Transport- und Lagerhaltungskosten können so reduziert sein.

In einer dritten Variante umfasst die Halteeinrichtung eine Kartonschachtel zur Aufnahme der Adapter. Die Kartonschachtel kann beispielsweise automatisch oder manuell falt- und verschließbar sein und in einer Ausführungsform entlang der gesamten Länge des Wischerblatts zu liegen kommen. Die Kartonschachtel kann eine oder mehrere Aussparungen zur Fixierung am Wischerblatt aufweisen. In einer Ausführungsform ist eine Aussparung vorgesehen, durch die ein Halteelement des Wischerblatts zur Verbindung mit einem Adapter ins Innere der Kartonschachtel ragt, wobei der Adapter im Inneren der Kartonschachtel in einer Richtung durch das Halteelement fixiert ist.

In noch einer weiteren Variante umfasst die Kartonschachtel eine Aufnahme für ein Ende des Wischerblatts. Die Kartonschachtel kann insbesondere haken- bzw. L-förmig ausgeführt sein. Dadurch kann die Kartonschachtel besonders sicher am Wischerblatt befestigt sein. Außerdem kann ein gemeinsames Einführen der Kartonschachtel mit dem Adapter und des Wischerblatts in die Außenverpackung unterstützt werden.

In noch einer weiteren Variante umfasst die Halteeinrichtung eine aufklappbare Schachtel zur Adapter-Aufnahme und eines Endes des Wischerblatts. Die Schachtel kann beispielsweise als Spritzgussteil aus einem Kunststoff herstellbar sein. Ein Scharnier der Schachtel kann als Faltscharnier integriert ausgeführt sein. Dadurch kann auch ein kleiner oder empfindlicher Adapter sicher am Wischerblatt befestigt werden. Erfindungsgemäss sind mehrere alternative Adapter vorgesehen, die mit dem Wischerblatt in der Außenverpackung angeordnet sind. Dadurch kann ein und dasselbe Wischerblatt mit unterschiedlichen Adaptern gehandelt werden, die es erlauben, das Wischerblatt an unterschiedlichen Kraftfahrzeugen bzw. Ausstattungsvarianten anzubringen. Die Adapter können in jeder der beschriebenen Varianten insbesondere in einer Reihe hintereinander auf der Oberseite des Wischerblatts gehalten sein.

In einer Ausführungsform umfasst die Außenverpackung eine Kartonverpackung. Die Kartonverpackung kann einfach herstellbar und befüllbar sein. In einer alternativen Ausführungsform umfasst die Außenverpackung eine Blisterverpackung. Die Blisterverpackung kann ebenfalls leicht und einfach hergestellt und gefüllt werden.

### Kurze Beschreibung der Figuren

Die Erfindung wird nun mit Bezug auf die beigefügten Figuren genauer beschrieben, in denen:
- Figur 1: eine erste Verpackung für ein Wischerblatt und ein erstes Verpackungsverfahren;
- Figur 2: eine zweite Verpackung für ein Wischerblatt und ein zweites Verpackungsverfahren;
- Figur 3: eine dritte Verpackung für ein Wischerblatt und ein drittes Verpackungsverfahren;
- Figur 4: eine vierte Verpackung für ein Wischerblatt und ein viertes Verpackungsverfahren, und
- Figur 5: eine fünfte Verpackung für ein Wischerblatt und ein fünftes Verpackungsverfahren
darstellt.

### Genaue Beschreibung von Ausführungsbeispielen

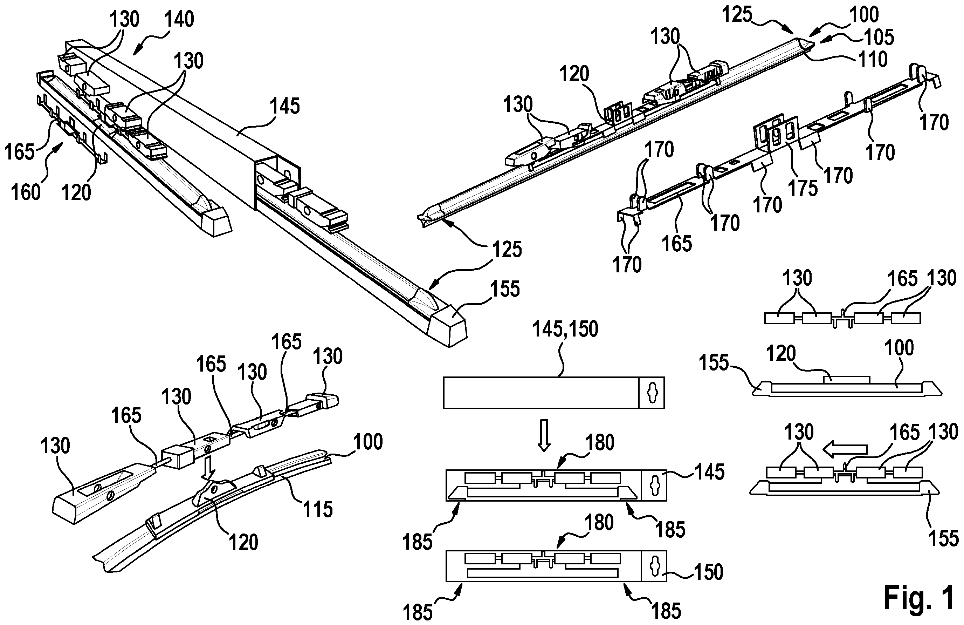

Figur 1 zeigt ein Wischerblatt 100 für ein Scheibenwischersystem, insbesondere eines Kraftfahrzeugs, und eine Verpackung für das Wischerblatt 100. Das Wischerblatt 100 umfasst üblicherweise ein Stahlelement 105, das mit einem Gummielement 110 verbunden ist. Das Gummielement 110 bildet eine Wischerlippe 115 zum Kontakt mit einer zu reinigenden Scheibe. Auf der Seite, die der Wischerlippe 115 gegenüberliegt, ist üblicherweise ein Befestigungselement 120 in etwa mittig zwischen Enden 125 des Wischerblatts angebracht. Zur Montage des Wischerblatts 100 an einem Ende eines Wischerarms eines Scheibenwischersystems wird ein Adapter 130 zwischen dem Befestigungselement 120 und dem Ende des Wischerarms angebracht. Üblicherweise stehen unterschiedliche Adapter 130 zur Verfügung, um das Wischerblatt 100 an unterschiedlichen Aufnahmesystemen anbringen zu können.

Eine Verpackung 140 für das Wischerblatt 100 umfasst eine Außenverpackung, die insbesondere als Kartonverpackung 145 oder Blisterverpackung 150 ausgebildet sein kann. Im Fall einer Kartonverpackung 145 ist üblicherweise eine Schiene 155 vorgesehen, in die die Wischerlippe 115 eingelegt wird, bevor das Wischerblatt 100 in der Außenverpackung 145, 150 angeordnet wird. Die Verpackung 140 nimmt das Wischerblatt 100 und wenigstens einen Adapter 130 auf.

Die Adapter 130 werden mittels einer Halteeinrichtung 160 an der Oberseite, d.h. an der der Wischerlippe 115 abgewandten Seite des Wischerblatts 150 fixiert. In der dargestellten Ausführungsform ist die Halteeinrichtung 160 als Spritzgussteil 165 ausgebildet. Das Spritzgussteil 165 umfasst bevorzugterweise Halter 170 zur Anlage, zum Anklammern oder Einclipsen mit der Oberseite des Wischerblatts 100 und mit den Adaptern 130. In einer Ausführungsform sind die Adapter 130 als Spritzgussteile ausgeführt und miteinander integriert herstellbar. Die Adapter 130 können beispielsweise einteilig miteinander hergestellt werden, wobei das Spritzgussteil 165 die einzelnen Adapter 130 stegartig miteinander verbindet. Bevorzugterweise sind Sollbruchstellen vorgesehen, um das Spritzgussteil 165 von den Adaptern 130 abbrechen zu können.

In einer besonders bevorzugten Ausführungsform umfasst die Halteeinrichtung 160 einen Abstandhalter 175, der sich in einer Richtung von der Wischerlippe 115 entfernt erstreckt. Der Abstandhalter 175 kommt bevorzugterweise im Bereich der Mitte zwischen den Enden 125 des Wischerblatts 100 zu liegen, wenn die Halteeinrichtung 160 am Wischerblatt 100 angebracht ist. Der Abstandhalter 175 ist dazu eingerichtet, sich an einer ersten Begrenzung 180 der Außenverpackung 145, 150 abzustützen, während die Enden 125 des Wischerblatts 100 an einer zweiten, gegenüberliegenden Begrenzung 185 anliegen. Eine konkave Biegung der Wischerlippe 115, wenn das Wischerblatt 100 unbelastet ist, kann so reduziert werden. Die konkave Biegung ist insbesondere bei einem rahmenlosen Wischerblatt 100 üblicherweise ausgeprägt.

Ein Verfahren zur Verpackung des Wischerblatts 100 und der Adapter 130 umfasst ein Anbringen der Adapter 130 am Spritzgussteil 165, ein Anbringen des Spritzgussteils 165 am Wischerblatt 100 und ein Verpacken des Wischerblatts 100 mit dem Spritzgussteil 165 und den Adaptern 130 in einer Außenverpackung 145, 150. Ist die Außenverpackung eine Kartonverpackung 145, so wird vor dem Einführen des Wischerblatts 100 in die Kartonverpackung 145 die Wischerlippe 115 noch auf der Schiene 155 gelagert. Die Schiene 155 wird dann zusammen mit den restlichen Elementen in die Kartonverpackung 145 eingeführt. Im Fall einer Blisterverpackung 150 kann die Schiene 155 entfallen.

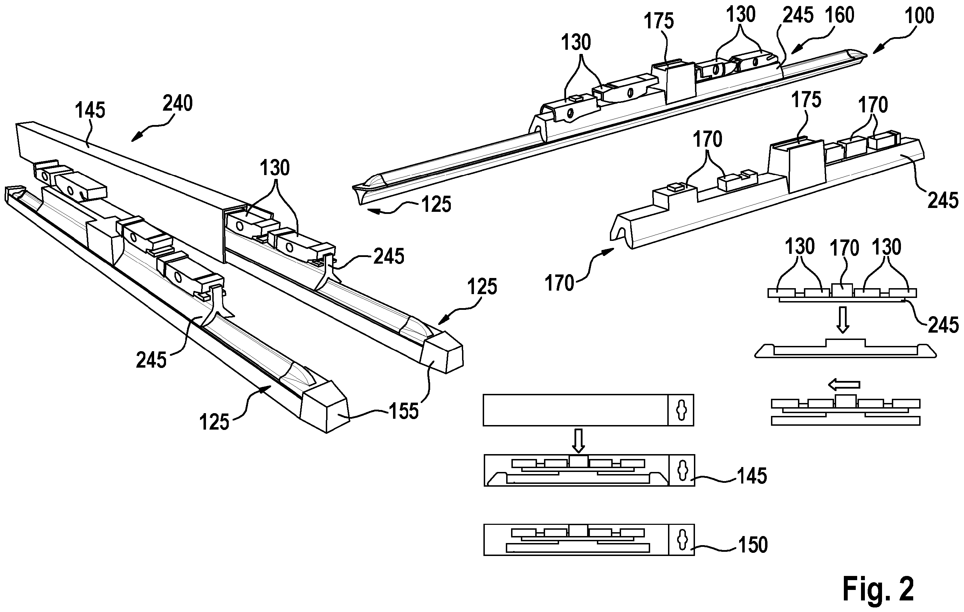

Figur 2 zeigt das Wischerblatt 100 von Figur 1 mit einer weiteren Verpackung 240. Die Verpackung 240 entspricht der in Figur 1 dargestellten Verpackung 140 mit dem Unterschied, dass die Halteeinrichtung 160 ein aufgeschäumtes Element 245 umfasst. Das aufgeschäumte Element 245 umfasst optional wieder Halter 170 zur Anlage, zum Einrasten oder Anclipsen an den Adaptern 130 bzw. dem Wischerblatt 100. Auch hier ist ein Abstandhalter 175 vorgesehen, der bevorzugterweise im Bereich der Mitte zwischen den Enden 125 des Wischerblatts 100 zu liegen kommt.

Zur Verpackung des Wischerblatts 100, der Adapter 130 und des aufgeschäumten Elements 245 in einer Außenverpackung 145, 150 wird in entsprechender Weise vorgegangen, wie oben mit Bezug auf Figur 1 genauer erklärt ist.

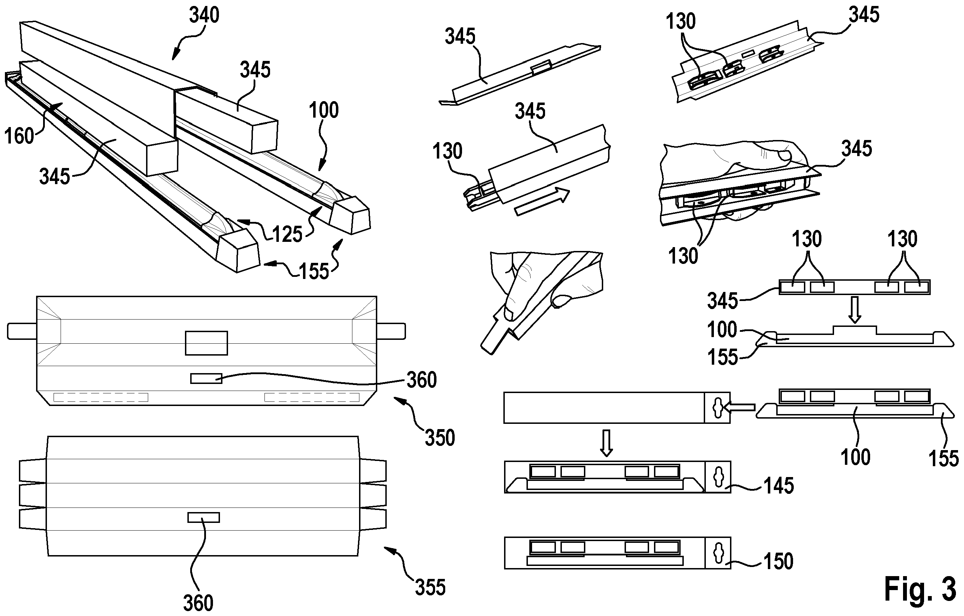

Figur 3 zeigt eine weitere Verpackung 340 für das Wischerblatt 100 der Figuren 1 und 2. In der dargestellten Ausführungsform ist die Halteeinrichtung 160 als Kartonschachtel 345 ausgeführt. In einer ersten Variante kann die Kartonschachtel 345 aus einem ersten Falzbogen 350 zur manuellen Füllung oder aus einem zweiten Falzbogen 355 zur automatisierten Füllung hergestellt werden. In einer Variante ist eine Aussparung 360 vorgesehen, durch die das Befestigungselement 120 des Wischerblatts 100 in das Innere der Kartonschachtel 345 ragen kann. Wenigstens einer der Adapter 130 kann dadurch in der Kartonschachtel 345 einseitig arretiert sein.

Zur Verpackung der Adapter 130 in der Kartonschachtel 345 wird die Kartonschachtel 345 zunächst gefaltet, dann werden die Adapter 130 eingelegt oder eingeführt und schließlich wird die Kartonschachtel 345 manuell oder automatisiert verschlossen. Die Kartonschachtel 345 mit den Adaptern 130 kann dann zusammen mit dem Wischerblatt 100 und gegebenenfalls der Schiene 155 in einer Außenverpackung 145, 150 verpackt werden, wie oben mit Bezug auf die Figuren 1 bis 2 bereits beschrieben ist.

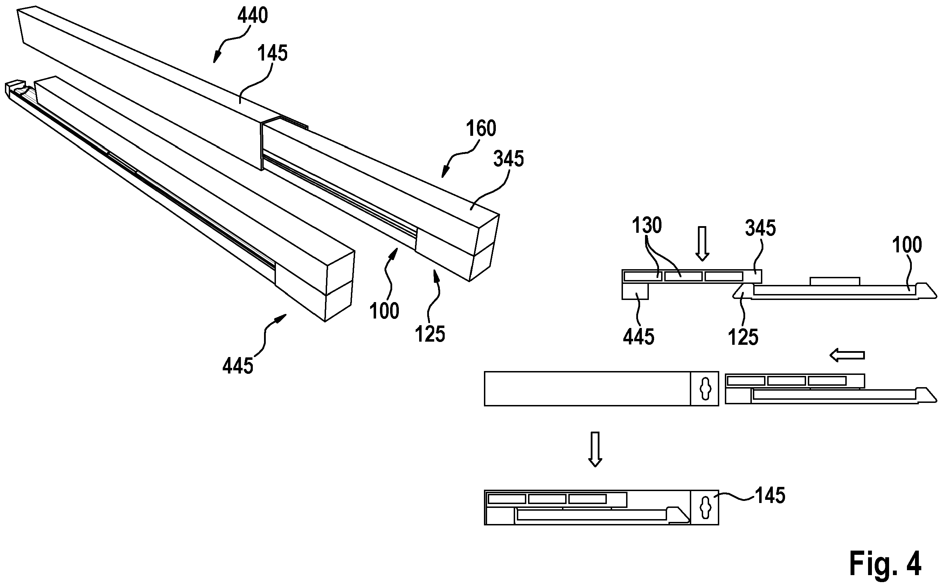

Figur 4 zeigt das Wischerblatt 100 der Figuren 1 bis 3 mit einer weiteren Verpackung 440. Die dargestellte Ausführungsform ähnelt der von Figur 3, mit dem Unterschied, dass die Kartonschachtel 345 so gefaltet ist, dass ein Aufnahmebereich 445 für ein Ende 120 des Wischerblatts 100 entsteht. Bevorzugterweise umfasst der Aufnahmebereich 445 Widerhaken, die aus dem Karton der Kartonschachtel 345 herausgearbeitet sind, um ein Herausrutschen des Endes 125 aus dem Aufnahmebereich 445 zu verhindern.

Zur Verpackung des Wischerblatts 100 mit der Kartonschachtel 345 und den Adaptern 130 werden die Adapter 130 zunächst in der zu faltenden Kartonschachtel 345 angeordnet, wie oben mit Bezug auf Figur 3 beschrieben wurde. Anschließend wird das Wischerblatt 100 optional auf einer Schiene 155 angeordnet und zusammen mit dieser teilweise in den Aufnahmebereich 445 eingeführt. Dadurch ist die Kartonschachtel 345 am Wischerblatt 100 angebracht und beide Elemente können gemeinsam in die Außenverpackung eingeführt werden, die bevorzugterweise als Kartonverpackung 145 ausgeführt ist. Dabei können die Bewegung des Einführens eines Endes 125 des Wischerblatts 100 in den Aufnahmebereich 445 und das Einführen des Wischerblatts 100 zusammen mit der Kartonschachtel 345 in die Außenverpackung 145 in einer gemeinsamen, linearen Bewegung durchgeführt werden.

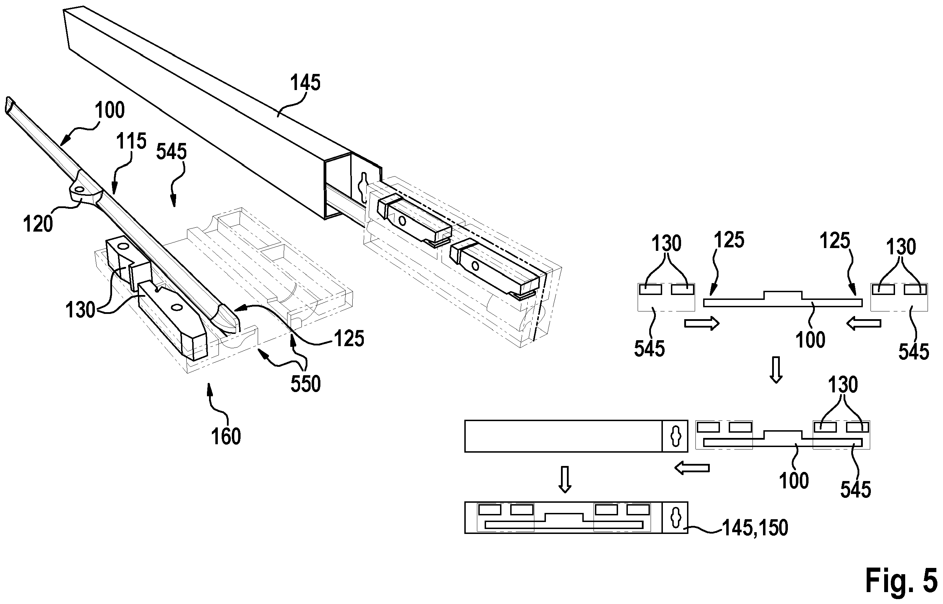

Figur 5 zeigt das Wischerblatt 100 der Figuren 1 bis 4 mit einer weiteren Verpackung 540. In der dargestellten Variante ist die Halteeinrichtung 160 als aufklappbare Schachtel 545 ausgeführt. Die Schachtel 545 umfasst bevorzugterweise eines oder zwei Faltscharniere 550 zum Auf- und Zuklappen. Die Schachtel 545 ist dazu eingerichtet, ein Ende 125 des Wischerblatts 100 sowie einen oder mehrere Adaptern 130 aufzunehmen. Dabei sind die Adapter 130 so angeordnet, dass sie auf der Oberseite des Wischerblatts 100 zu liegen kommen, die von der Wischerlippe 115 abgewandt ist.

Zum Verpacken wird die Schachtel 545 hergestellt und mit einem oder mehreren Adaptern 130 bestückt. Dann kann die Schachtel 545 geschlossen werden. Wenigstens ein Ende 125 des Wischerblatts 100 wird durch eine entsprechende Aussparung in die bereits geschlossene Schachtel 545 eingeführt. Anschließend werden das Wischerblatt 100 und die Schachteln 545 gemeinsam in die Außenverpackung eingeführt. Als Außenverpackung kommen wieder eine Kartonverpackung 145 und eine Blisterverpackung 150 infrage.

## Patentansprüche

1. Verpackungssystem (140, 240, 340, 440, 540), wobei das Verpackungssystem (140, 240, 340, 440, 540) folgendes umfasst:
- ein Wischerblatt (100) für ein Scheibenwischersystem;
- eine Außenverpackung (145, 150) zur Aufnahme des Wischerblatts (100);
- mehrere unterschiedliche Adapter (130), jeweils zur Befestigung des Wischerblatts (100) an einem Wischerarm des Scheibenwischersystems; und
- eine Halteeinrichtung (160) zur Fixierung der Adapter (130) in der Außenverpackung (145, 150), wobei
- die Halteeinrichtung (160) die Adapter (130) am Wischerblatt (100) an einer Seite fixiert, die der Wischerlippe (115) des Wischerblatts (100) gegenüber liegt.

2. Verpackungssystem (140) nach Anspruch 1, wobei die Halteeinrichtung (160) ein Spritzgussteil (165) umfasst.

3. Verpackungssystem (140) nach Anspruch 2, wobei ein Adapter (130) ein Spritzgussteil umfasst, das gemeinsam mit der Halteeinrichtung (165) herstellbar ist.

4. Verpackungssystem (240) nach Anspruch 1, wobei die Halteeinrichtung (165) ein aufgeschäumtes Element (240) umfasst.

5. Verpackungssystem (140, 240) nach einem der Ansprüche 2 bis 4, wobei die Halteeinrichtung (160) einen Abstandhalter (175) aufweist, der im Bereich der Mitte des Wischerblatts (100) zu liegen kommt und wobei Enden (125) des Wischerblatts (100) und die Halteeinrichtung (160) derart an gegenüberliegenden Begrenzungen (180, 185) der Außenverpackung (145, 150) zu liegen kommen, dass eine konkave Biegung einer Wischerlippe (115) des Wischerblatts (100) reduziert wird.

6. Verpackungssystem (340, 440) nach Anspruch 1, wobei die Halteeinrichtung (160) eine Kartonschachtel (345) zur Aufnahme der Adapter umfasst.

7. Verpackungssystem (340, 440) nach Anspruch 6, wobei die Kartonschachtel (345) eine Aufnahme für ein Ende (125) des Wischerblatts (100) umfasst.

8. Verpackungssystem (540) nach einem der vorangehenden Ansprüche, wobei die Halteeinrichtung (160) eine aufklappbare Schachtel (545) zur Aufnahme der Adapter und eines Endes des Wischerblatts umfasst.

9. Verpackungssystem (140, 240, 340, 440, 540) nach einem der vorangehenden Ansprüche, wobei die Außenverpackung (145, 150) eine Kartonverpackung (145) umfasst.

10. Verpackungssystem (140, 240, 340, 440, 540) nach einem der Ansprüche 1 bis 9, wobei die Außenverpackung (145, 150) eine Blisterverpackung (150) umfasst.

## Claims

1. Packaging system (140, 240, 340, 440, 540), wherein the packaging system (140, 240, 340, 440, 540) comprises the following:
- a wiper blade (100) for a windscreen wiper system;
- and outer packaging (145, 150) for receiving the wiper blade (100);
- a plurality of different adapters (130), in each case for fastening the wiper blade (100) to a wiper arm of the windscreen wiper system; and
- a holding device (160) for fixing the adapters (130) in the outer packaging (145, 150),
wherein
- the holding device (160) fixes the adapters (130) to the wiper blade (100) in a side which lies opposite the wiper lip (115) of the wiper blade (100).

2. Packaging system (140) according to Claim 1, wherein the holding device (160) comprises an injection moulded part (165).

3. Packaging system (140) according to Claim 2, wherein an adapter (130) comprises an injection moulded part which can be produced together with the holding device (165).

4. Packaging system (240) according to Claim 1, wherein the holding device (165) comprises a foamed element (240).

5. Packaging system (140, 240) according to one of Claims 2 to 4, wherein the holding device (160) has a spacer (175) which comes to lie in the region of the centre of the wiper blade (100), and wherein ends (125) of the wiper blade (100) and the holding device (160) come to lie on opposite boundaries (180, 185) of the outer packaging (145, 150) in such a manner that a concave bending of a wiper lip (115) of the wiper blade (100) is reduced.

6. Packaging system (340, 440) according to Claim 1, wherein the holding device (160) comprises a cardboard box (345) for receiving the adapters.

7. Packaging system (340, 440) according to Claim 6, wherein the cardboard box (345) comprises a receptacle for one end (125) of the wiper blade (100).

8. Packaging system (540) according to one of the preceding claims, wherein the holding device (160) comprises an openable box (545) for receiving the adapters and one end of the wiper blade.

9. Packaging system (140, 240, 340, 440, 540) according to one of the preceding claims, wherein the outer packaging (145, 150) comprises a cardboard packaging (145).

10. Packaging system (140, 240, 340, 440, 540) according to one of Claims 1 to 9, wherein the outer packaging (145, 150) comprises a blister packaging (150).

## Revendications

1. Système d'emballage (140, 240, 340, 440, 540), le système d'emballage (140, 240, 340, 440, 540) comprenant :
- un balai d'essuie-glace (100) pour un système d'essuie-glace ;
- un emballage extérieur (145, 150) pour recevoir le balai d'essuie-glace (100) ;
- plusieurs adaptateurs différents (130), à chaque fois pour la fixation du balai d'essuie-glace (100) à un bras d'essuie-glace du système d'essuie-glace ; et
- un dispositif de retenue (160) pour fixer l'adaptateur (130) dans l'emballage extérieur (145, 150),
- le dispositif de retenue (160) fixant les adaptateurs (130) sur le balai d'essuie-glace (100) au niveau d'un côté qui est opposé à la lèvre de balai d'essuie-glace (115) du balai d'essuie-glace (100).

2. Système d'emballage (140) selon la revendication 1, dans lequel le dispositif de retenue (160) comprend une pièce moulée par injection (165).

3. Système d'emballage (140) selon la revendication 2, dans lequel un adaptateur (130) comprend une pièce moulée par injection qui peut être fabriquée conjointement avec le dispositif de retenue (165).

4. Système d'emballage (240) selon la revendication 1, dans lequel le dispositif de retenue (165) comprend un élément moussé (240).

5. Système d'emballage (140, 240) selon l'une quelconque des revendications 2 à 4, dans lequel le dispositif de retenue (160) présente un élément d'espacement (175) qui vient s'appliquer dans la région du centre du balai d'essuie-glace (100), et des extrémités (125) du balai d'essuie-glace (100) et le dispositif de retenue (160) venant s'appliquer contre des limitations opposées (180, 185) de l'emballage extérieur (145, 150) de telle sorte qu'une flexion concave d'une lèvre de balai d'essuie-glace (115) du balai d'essuie-glace (100) soit réduite.

6. Système d'emballage (340, 440) selon la revendication 1, dans lequel le dispositif de retenue (160) comprend une boîte en carton (345) pour recevoir l'adaptateur.

7. Système d'emballage (340, 440) selon la revendication 6, dans lequel la boîte en carton (345) comprend un logement pour une extrémité (125) du balai d'essuie-glace (100).

8. Système d'emballage (540) selon l'une quelconque des revendications précédentes, dans lequel le dispositif de retenue (160) comprend une boîte rabattable (545) pour recevoir l'adaptateur et une extrémité du balai d'essuie-glace.

9. Système d'emballage (140, 240, 340, 440, 540) selon l'une quelconque des revendications précédentes, dans lequel l'emballage extérieur (145, 150) comprend un emballage en cartons (145).

10. Système d'emballage (140, 240, 340, 440, 540) selon l'une quelconque des revendications 1 à 9, dans lequel l'emballage extérieur (145, 150) comprend un emballage coque (150).
